# EUROPÄISCHE PATENTSCHRIFT

(11) **EP 3 325 202 B1**
(45) Veröffentlichungstag und Bekanntmachung des Hinweises auf die Patenterteilung: **29.03.2023**
(21) Anmeldenummer: 16782005.9
(22) Anmeldetag: 14.07.2016
(51) Int. Cl.: B23D 37/00, B23D 37/22, B23D 41/04

(54) **VERFAHREN UND VORRICHTUNG ZUM FEINBEARBEITEN VON VORBEARBEITETEN LAGERSITZEN DER HAUPTLAGER UND HUBLAGER VON KURBELWELLEN**
METHOD AND DEVICE FOR THE FINE-MACHINING OF PRE-MACHINED BEARING SEATS OF THE MAIN BEARINGS AND CRANK PIN BEARINGS OF CRANKSHAFTS
PROCÉDÉ ET DISPOSITIF D'USINAGE DE FINITION DE CHAISES DE PALIER PRÉ-USINÉES DES PALIERS PRINCIPAUX ET DES PALIERS MOBILES DE VILEBREQUINS

(30) Priorität: 20.07.2015 DE 102015009481
(43) Veröffentlichungstag der Anmeldung: 30.05.2018
(73) Patentinhaber: NILES-SIMMONS Industrieanlagen GmbH, 09117 Chemnitz (DE)
(72) Erfinder: NAUMANN, Hans, J., 09117 Chemnitz (DE); PAUSE, Bernhard, 74821 Mosbach (DE); HALLE, Moritz, 09127 Chemnitz (DE); BAUER, Ruben, 08147 Crinitzberg (DE); HOCHMUTH, Carsten, 09127 Chemnitz (DE); SCHMIDT, Gerhard, 09116 Cemnitz (DE); GENTZEN, Jens, 09244 Lichtenau (DE)
(74) Vertreter: Findeisen Neumann Scheit Partnerschaft mbB
(86) Internationale Anmeldenummer: PCT/DE2016/000281
(87) Internationale Veröffentlichungsnummer: WO 2017/012605

(56) Entgegenhaltungen:
- EP-A1- 2 021 144
- EP-A2- 0 328 958
- DE-C1- 4 119 162
- DE-C2- 4 406 272
- US-A- 4 861 204
- US-A1- 2010 003 098
- US-B1- 6 684 500
- AUGSTEN G ET AL: "DREHEN - DREHRAEUMEN - EIN NEUES VERFAHREN ZUM FERTIGEN VON KURBEL- UND NOCKENWELLEN", WERKSTATT + BETRIEB, CARL HANSER VERLAG, MÜNCHEN DE, Bd. 123, Nr. 12, 1. Dezember 1990 (1990-12-01), Seiten 915-920, XP000173631, ISSN: 0043-2792

## Beschreibung

Die Erfindung betrifft ein Verfahren zum Feinbearbeiten von vorbearbeiteten Lagersitzen von Kurbelwellen mit Werkzeugen mit bestimmter Schneide gemäß dem Oberbegriff des Patentanspruchs 1. Diesbezüglich sind bereits Verfahren zum Bearbeiten der Lagersitze von Haupt- und Hublagern der Kurbelwelle sowie der jeweils an die Lagersitze angrenzenden Seitenflächen bekannt, bei denen nach dem Vorbearbeiten der Kurbelwelle eine Bearbeitung mit Drehfräs- und Drehräumwerkzeugen erfolgt. Dabei wird überwiegend ein abschließendes Finishen durchgeführt, um die angestrebte Qualität der Kurbelwelle zu erreichen.

So beschreibt DE 197 49 940 C2 ein Verfahren für die spanabhebende Bearbeitung der Lagerflächen und angrenzenden Seitenflächen von Kurbelwellen. Demzufolge werden die Kurbelwellen durch die Verfahrensschritte Spanen - Härten - Spanen - Finishen bearbeitet. Mit diesem Verfahrensablauf kann zwar eine relativ hohe Genauigkeit erreicht werden, die eigentliche Feinbearbeitung erfordert jedoch eine zusätzliche Bearbeitungsoperation.

Aus EP 2 338 625 A1 ist ein Verfahren zur Bearbeitung von Haupt- und Hublagern bekannt, bei dem nach dem Vorbearbeiten einer Kurbelwelle deren Lagersitze zunächst gehärtet, danach hartdrehgefräst und schließlich auf Fertigmaß hartdrehgeräumt werden.

DE 44 06 272 C2 betrifft ein Verfahren zur spanenden Bearbeitung rotationssymmetrischer Werkstücke, bei dem einer Dreh-Räum-Bearbeitung in Abhängigkeit der Drehbewegung der Werkzeugscheibe eine Zustellbewegung in Richtung Schneide als Kompensationsbewegung überlagert wird. Diese Kompensationsbewegung wird über eine spezielle Sensoranordnung direkt nach dem Prozess berechnet und ermöglicht Korrekturen sowohl in X-Richtung als auch in Z-Richtung. Allerdings werden für die Kompensation nur Messwerte der Schneiden erfasst, so dass zwangsläufig nur der Werkzeugverschleiß kompensiert wird.

Gemäß EP 841 116 A2 erfolgt die Bearbeitung der Lagerflächen an einer Kurbelwelle durch Einstechdrehen und anschließendes Drehräumen mit einer Werkzeugträgerscheibe. Hierbei wird der tangentialen Vorschubbewegung beim Drehräumen eine radiale lineare Bewegung überlagert.

Aus DE 102 08 990 A1 ist ein Bildverarbeitungssystem bekannt, mit dem zunächst die Kanten der Schneidplatten erfasst und nachfolgend Rund- und/oder Planlaufabweichungen berechnet werden. Aus diesen Daten werden in der Maschinensteuerung Korrekturfaktoren errechnet. Diese werden mit einem NC-Programm derart verarbeitet, dass sich durch eine entsprechende Ansteuerung der maschinenbezogenen NC-Achsen eine ideale Kreisform und/oder ein idealer Planlauf ergeben.

Mit den oben benannten technischen Lösungen werden Kompensationsbewegungen als eine Korrektur der Vorschubbewegungen überwiegend durch Korrekturen am Werkzeug durchgeführt. Die geforderte hohe Qualität wird in der Regel nur durch einen zusätzlichen Verfahrensschritt erzielt. Außerdem betreffen diese Lösungen teilweise Anwendungen für gehärtete Kurbelwellen unter Nutzung von zu kühlenden Bearbeitungswerkzeugen. Derartige Ausführungen sind unter ökologischen Aspekten jedoch problematisch. Deshalb wird zunehmend angestrebt, ein induktives Härten in der Fertigungskette zu vermeiden, um die jeweilige Energieeffizienz der Produktion zu verbessern. Gleichzeitig wird eine Trockenbearbeitung bevorzugt, um die sonst notwendige Entsorgung von Kühlmitteln zu reduzieren.

Aufgabe der Erfindung ist es daher, eine neue technische Lösung zum Feinbearbeiten von Kurbelwellen zu schaffen, mit der unterschiedliche Oberflächengeometrien an Hauptlagern und Hublagern erzeugt werden können. Gleichzeitig sollen auch nur Teilbereiche der Oberfläche des Lagersitzes bearbeitet werden können.

Zur Abgrenzung einer sog. Feinbearbeitung von anderen Bearbeitungsstufen wird im Rahmen der vorliegenden Erfindung davon ausgegangen, dass die Toleranz, mit der üblicherweise Durchmesser bearbeitet werden müssen, nach einer Vorbearbeitung (z.B. durch Fräsen) etwa "d+0,6mm" beträgt. Folglich soll die zu schaffende technische Lösung für einen Bereich von bis zu 0,5mm Aufmaß konzipiert werden. Dabei sollen mittels einer Trockenbearbeitung umweltschonend genaue Werkstückflächen an vorzugsweise ungehärteten Kurbelwellen in einer hohen Maß- und Oberflächenqualität erreicht werden. Hierfür sollen eine zweckmäßige Prozesskette sowie eine Vorrichtung zur Durchführung des Verfahrens geschaffen werden.

Diese Aufgabe wird verfahrenstechnisch gelöst mit den technischen Merkmalen gemäß Anspruch 1. Zur Durchführung des Verfahrens ist beispielsweise ein Werkzeug mit den technischen Merkmalen gemäß Anspruch 7 geeignet. Sowohl der Verfahrensablauf als auch das Werkzeug können weiter ausgestaltet werden. Diesbezügliche technische Merkmale sind Gegenstand von Unteransprüchen, die in einem Ausführungsbeispiel näher beschrieben werden.

Der erfindungsgemäße Lösungsansatz besteht darin, dass der Dreh-Räum-Bearbeitung der Lagersitze eine Kompensation in Abhängigkeit der Drehbewegung des Werkzeuges in radialer Richtung (X-Achse) überlagert wird. Gemäß Anspruch 6 erfolgt die Drehbewegung durch Interpolation von mindestens zwei Achsen. Die Kompensationsbewegung wird direkt nach dem Messen für den Prozess berechnet. Grundlage dieser Bewegung zur Kompensation sind Messwerte einer Sensoranordnung. Als Sensor werden taktile oder berührungslose Sensoren verwendet. Der jeweilige Sensor wird über die Oberfläche eines Lagersitzes in einer definierten Abfolge bewegt, um Oberflächenspezifika zu messen bzw. um aus ermittelten Messwerten derartige Oberflächenspezifika berechnen zu können. Somit wird eine Erfassung und Verarbeitung von Sensorwerten auf der Bearbeitungsmaschine zur Erreichung einer konkret geforderten Oberflächengeometrie realisiert.

Die Ermittlung einer Kompensationstabelle erfolgt auf Basis der gemessenen Oberfläche. Es wird davon ausgegangen, dass zur Erfassung der Geradheit der Oberfläche das Werkstück (also die Kurbelwelle) positioniert wird und ein Sensor über diese Oberfläche bewegt wird. Bei der Vermessung der Rundheit wird davon ausgegangen, dass der Sensor lagefixiert ist und sich das Werkstück (also die Kurbelwelle) dreht.

Bei der Verfahrensdurchführung wird zunächst die Anzahl der zu ermittelnden Messlagen für die Geradheit definiert. Der Sensor wird relativ zur Messoberfläche über die NC-Achsen der Werkzeugmaschine in seinen Messbereich positioniert und zum Beginn der Messstrecke bewegt. Die Kurbelwelle wird nun auf die erste Messlage bewegt. Anschließend wird der Sensor in Lagerlängsrichtung (Z-Richtung) bis zum Ende der Messstrecke bewegt. Während dieser Fahrt werden Messwerte über die NC erfasst. Die Anzahl der Messwerte kann hierbei gesteuert werden. Danach erfolgt ein Abheben des Sensors, eine Repositionierung an den Beginn der Messstrecke und eine Positionierung der Kurbelwellenoberfläche zur nächsten Messlage. Dies wird solange durchgeführt, bis alle Messlagen und damit Geradheiten erfasst und aufgezeichnet wurden. Anschließend findet eine Mittelwertbildung der Geradheiten aller Messlagen zueinander statt. Daraus resultiert eine Mittelwertkurve.

Alternativ kann die Geradheit auch über eine Erfassung der Rundheit der Lageroberflächen erfasst werden. Hierbei wird die zu bearbeitende Kurbelwelle positioniert und ein Sensor wird über die Lageroberflächen bewegt. Zunächst wird die Anzahl der zu ermittelnden axialen Messpositionen definiert. Danach wird der Sensor relativ zur Messoberfläche über die Achsen der Werkzeugmaschine zur ersten axialen Messposition bewegt. Nunmehr wird die Kurbelwelle auf die erste Messlage bewegt. Danach wird die Kurbelwelle in Umfangsrichtung des Lagersitzes (C-Richtung) bis zum Ende der Messstrecke bewegt. Während dieser

Bewegung wird eine wählbare Anzahl von Messwerten über eine zugeordnete Erfassungseinheit erfasst. Danach wird die Kurbelwelle an den Beginn der Messstrecke repositioniert und der Sensor wird zur nächsten axialen Messposition bewegt. Weitere gleichartige Messabläufe werden solange durchgeführt werden, bis alle Messlagen und damit Rundheiten erfasst und aufgezeichnet wurden. Danach werden aus den einzelnen Rundheitskurven winkellageabhängige Geradheitskurven abgeleitet. Anschließend findet eine Mittelwertbildung der Geradheiten aller Messlagen zueinander statt, so dass auch bei dieser Verfahrensvariante eine resultierende Mittelwertkurve erzielt wird.

Aus der resultierenden Mittelwertkurve wird ausgehend des ersten Messpunktes eine Bezugsebene festgelegt und diese zum Nullpunkt definiert. In definierten axialen Abständen werden nun Differenzwerte der Geradheit der Mittelwertkurve zu einer vorgegebenen Kompensationskurve ermittelt. Verschiedene vorgegebene Kompensationskurven sind möglich. Die Differenzwerte können in beliebiger Anzahl berechnet und als Korrekturwerte tabellarisch in der Steuerung hinterlegt werden. Damit können sie im Schnittprozess sowohl für eine nach links als auch für eine nach rechts geneigte Schneide als Kompensationswerte (radiale Zustellbewegung in Abhängigkeit des Werkzeugdrehwinkels) verwendet werden.

Jeder axiale Kompensationswert kann einer konkreten Winkellage des Werkzeuges zugeordnet werden. Somit werden in einem folgenden Schnitt diese Werte winkelgetreu auf die jeweils eingesetzte Schneide aufgeprägt. Über diese Kompensationsbewegung lässt sich ebenfalls ein Abheben der Schneide auf der zu bearbeitenden Oberfläche realisieren. Das Abheben ist zweckmäßig, um beispielsweise eine Schnittaufteilung zu bewirken oder um das Auftreten von Schwingungen zu reduzieren oder um Beschädigungen der sich anschließenden Lagerflächen durch Späne zu vermeiden. Dieses Vorgehen ist für alle schräg gestellten Schneiden anwendbar. Die Kompensationswertermittlung nimmt vorzugsweise auch alle Temperaturgänge, Verschleißerscheinungen und geometrische Fehlstellungen des Werkstückes mit auf und ist somit als prozessführende Kompensation ausgelegt. Dabei kann die Erfassung der Messwerte auch außerhalb der Werkzeugmaschine erfolgen.

Zur Durchführung des Verfahrens ist ein Werkzeug für das Drehräumen geeignet, das in an sich bekannter Weise scheibenförmig ausgeführt ist, mit Schneideinsätzen bestückte Kassetten aufweist und an der Maschinenspindel oder über einen Adapter an der Maschinenspindel befestigt ist. Unter Kassette wird eine Vorrichtung zur Aufnahme einer Schneide verstanden. Ein Werkzeugsegment besteht entweder aus einer Vielzahl von Kassetten oder trägt mindestens eine Schneide.

Im vorliegenden Sachverhalt kann anstelle einer Scheibe auch ein Drehräum-Werkzeug verwendet werden, das einen in einen Antriebskopf einwechselbaren Grundkörper aufweist und aus einer Kassette mit Schneideinsätzen und einem Spannkegel besteht. Ein derartiger Antriebskopf kann zum Beispiel an einem Dreh-Fräs-Bohr-Bearbeitungszentrum mit den Achsen X, Y, Z und B angeordnet sein. Das Einwechseln eines Werkzeuges mit Spannkegel erfolgt dabei vorzugsweise über ein Werkzeugmagazin und Greifer in die Werkzeugaufnahme eines Antriebskopfes in einem Bearbeitungszentrum.

Mit der vorgeschlagenen Ausgestaltung besteht die Möglichkeit, durch eine minimale Schrägstellung der Schneide durch Verfahren der B-Achse (Schwenkachse des Werkzeuges) des Antriebskopfes, also Schwenken des Werkzeuges über die B-Achse, unterschiedliche Oberflächengeometrien zum Beispiel kegelige und ballige Flächen im Mikrometerbereich an den Lagersitzen der Kurbelwelle zu erzeugen.

Durch Anwendung der erfindungsgemäßen technischen Lösung ergeben sich insbesondere Vorteile bei der Feinbearbeitung von Kurbelwellen, indem nunmehr mit einer gegenüber dem Stand der Technik umweltschonenden Trockenbearbeitung genaue Werkstückflächen in einer hohen Maß- und Oberflächenqualität erzeugt werden können. Dabei können unter Beachtung der jeweils konkreten Fertigungs- und/oder Einsatzbedingungen beispielsweise verschiedene Oberflächenkonturen (konvex, gerade, konkav, Kombinationen derselben usw.) erzeugt werden. Ebenso können Fehler in der Oberflächenkontur (z.B. Drallwellen) vorteilhaft reduziert werden.

Die bevorzugte Anwendung sind ungehärtete Kurbelwellen (auch Grauguss). Ebenso können gehärtete Kurbelwellen bearbeitet werden. Weiterhin können grundsätzlich auch andere rotationssymmetrische Bauteile bearbeitet werden.

Diese technische Lösung kann in verschiedenartiger Weise weiter ausgestaltet werden. So kann neben einer einstufigen Feinbearbeitung auch eine zweistufige Feinbearbeitung vorgesehen werden, wobei zwischen diesen Bearbeitungsstufen eine Messung erfolgt. Ferner können beispielsweise durch unterschiedliche Getriebepositionen (das "Getriebe" wird durch die Wirkverbindung von Werkzeug und Werkstückspindel gebildet) bei gleicher Position der Schneiden zu Schnittbeginn bei einem wiederholten Schnitt die entstehenden Welligkeiten bei gleichen oder auch geänderten technologischen Parametern reduziert werden. Ebenso kann zur Reduzierung der Welligkeit ein definierter axialer Schneidenversatz zu Schnittbeginn bei gleicher Winkelstellung des Getriebes erfolgen.

Nachfolgend wird ein Ausführungsbeispiel der Erfindung anhand der Zeichnung beschrieben. Es zeigen:
- Fig. 1: ein Diagramm mit Darstellung des funktionellen Zusammenhangs zur Ermittlung der Radiusabweichung, wobei die Zieloberflächenkontur eine konkave Kontur ist
- Fig. 2: ein Diagramm mit Darstellung des funktionellen Zusammenhangs zur Ermittlung der Radiusabweichung, wobei die Zieloberflächenkontur eine beliebige Kontur ist
- Fig. 3a: eine stilisierte Darstellung der Wirkverbindung von Werkzeug mit schräggestellter Schneide und Werkstück (Kurbelwelle) während der Kompensation
- Fig. 3b: die Wirkverbindung von Werkzeug und Werkstück (Kurbelwelle) gemäß Fig. 3a aus einem anderen Betrachtungswinkel in Seitenansicht
- Fig. 4: den grundsätzlichen Aufbau eines Werkzeuges in perspektivischer Ansicht
- Fig. 5: eine Variante zur Ausrichtung von zueinander gegenläufigen Schneiden

Die vorliegende technische Lösung betrifft primär die Feinbearbeitung von vorbearbeiteten Lagersitzen an Hauptlagern und Hublagern von Kurbelwellen. Hierbei werden Schneidwerkzeuge über jeweils unterschiedliche Bereiche der Lagerfläche geführt, indem diese Schneidwerkzeuge ausgehend von den sich gegenüberliegend angeordneten Endabschnitten des jeweiligen Lagersitzes jeweils eine zum axialen Mittelpunkt desselben Lagersitzes gerichtete Oberflächenbearbeitung ausführen.

Das Drehräumwerkzeug kann aus einem scheibenförmigen Werkzeugträger, der unmittelbar an der Maschinenspindel oder mittelbar über einen Adapter an einer Maschinenspindel aufgenommen wird, bestehen, der an seinem Umfang mindestens eine separat bestückte Drehräumkassette oder ein Segment mit gegenläufig angeordneten Schneiden oder eine Vielzahl von jeweils entsprechend angeordneten Feinschneid- bzw. Schlichtschneidpaaren aufweist.

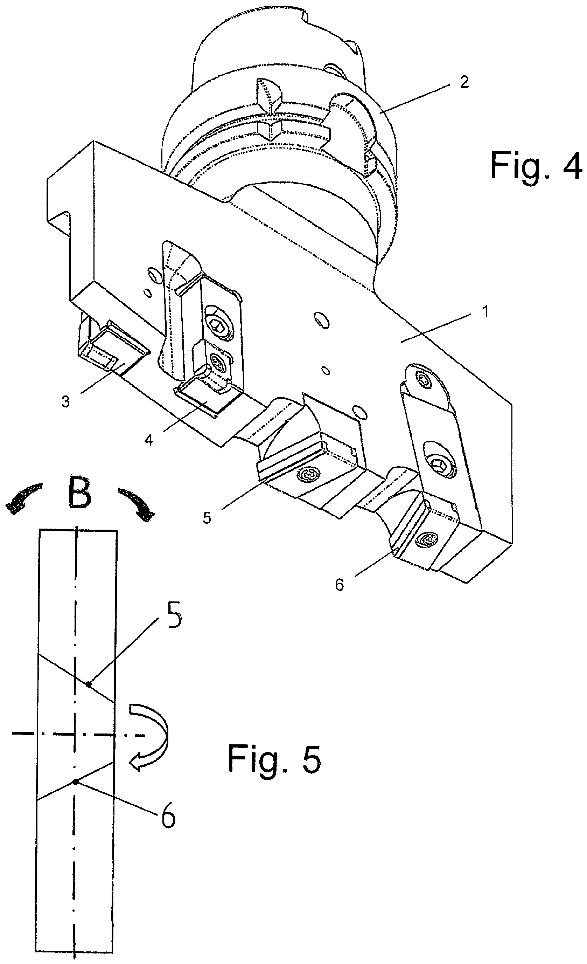

Aus **Fig. 4** ist der Aufbau eines segmentförmigen Werkzeuges für das Drehräumen ersichtlich. In der konkreten Ausführung ist ein Werkzeugträger 1 vorgesehen, der eine HSK-Aufnahme 2 aufweist. Das Werkzeug besteht folglich aus einen in den Antriebskopf des Bearbeitungszentrums einwechselbaren Grundkörper / Werkzeugträger 1 mit Schneideinsätzen und einem Spannkegel. Die Schneideinsätze 3 und 4 sind für hier nicht näher gezeigte Kurbelwellen mit Freistichen oder Radienübergängen und die Schlichteinsätze mit den Schneiden 5 und 6 für eine Drehräumbearbeitung (links und rechts) vorgesehen.

Aus **Fig. 5** ist ersichtlich, dass die Schneiden 5 und 6 gegenläufig angeordnet sind, indem die Schneide 5 nach links und die Schneide 6 nach rechts um denselben Winkelbetrag geneigt ist. Diese Schneiden 5 und 6 können aber auch in zueinander unterschiedlichen Winkeln und somit in unterschiedlichen Schneidenneigungen ausgerichtet werden.

Weiterhin sind aus Fig. 5 wesentliche Bewegungsachsen ersichtlich. Der zwischen den Schneiden 5 und 6 angeordnete Pfeil stilisiert die Drehachse des Werkzeuges und der mit "B" bezeichnete Pfeil stilisiert die Schwenkachse des Werkzeuges.

Vor dem Feinschneiden auf Fertigmaß erfolgt eine Messung der Oberflächengeometrie, insbesondere von Rundheit und Geradheit. Dabei werden Geradheiten in mehreren definierten Winkellagen entlang der Lagerachse auf der Oberfläche der Lagersitze erfasst. Außerdem werden Rundheiten an mehreren definierten Achspositionen gemessen. Sofern in diesem Prozess eine Abweichung der IST-Oberflächengeometrie von einer vorab definierten SOLL-Oberflächengeometrie auftritt, wird eine Korrektur berechnet. Diese berechnete Korrektur wird jeder sich im Eingriff befindlichen Schneide 5 bzw. 6 während des Feinschneidens überlagert. Hierfür wird während des Schneideneingriffes eine zur Oberfläche der Lagersitze normale und/oder tangentiale Kompensationsbewegung der Schneide 5 bzw. 6 in direkter Abhängigkeit der Drehbewegung der Schneide 5 bzw. 6 und/oder in direkter Abhängigkeit der Drehbewegung der Werkstückspindel so ausgeführt, dass zumindest Teilbereiche der Oberfläche des Lagersitzes bearbeitet werden können. Teilbereiche sind derartige Abschnitte der Oberfläche, die eine signifikante Abweichung zur Zieloberflächenkontur aufweisen oder geometrisch nicht durch lediglich eine Schneide bearbeitet werden kann. Dies ist beispielsweise zutreffend, sofern die axiale Ausdehnung der Oberfläche des Lagersitzes größer ist als die Schneidenbreite. Eine Teilbereichsbearbeitung kann ebenfalls notwendig werden, wenn eine signifikante Abweichung zur Zieloberflächenkontur vorhanden ist.

Für die Erfassung der Geradheit wird die zu bearbeitende Kurbelwelle positioniert und ein Sensor wird über die Lageroberfläche bewegt. Hierfür wird zunächst die Anzahl der zu ermittelnden Messlagen definiert und danach wird der Sensor relativ zur Messoberfläche über die Achsen der Werkzeugmaschine in seinen Messbereich positioniert und zum Beginn der Messstrecke bewegt. Danach wird die Kurbelwelle auf die erste Messlage bewegt, bevor der Sensor in Längsrichtung des Lagersitzes (Z-Richtung) bis zum Ende der Messstrecke bewegt wird. Während dieser Bewegung wird eine wählbare Anzahl von Messwerten erfasst.

Danach wird der Sensor zum Beginn der Messstrecke repositioniert und es werden weitere gleichartige Messabläufe solange durchgeführt, bis alle Messlagen und damit Geradheiten erfasst und aufgezeichnet wurden. Die Geradheiten der Lageroberflächen können auch auf der Grundlage von Rundlaufmessungen erfasst werden.

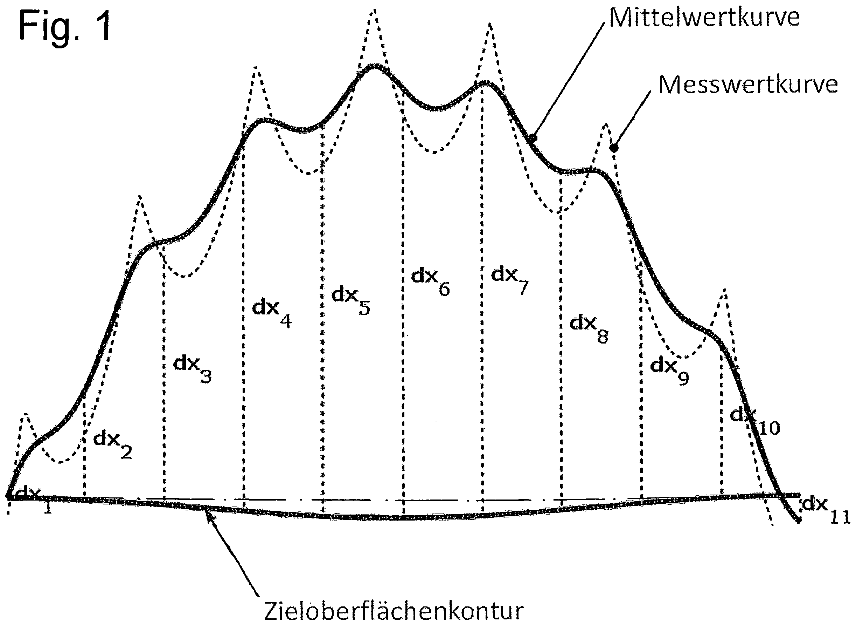

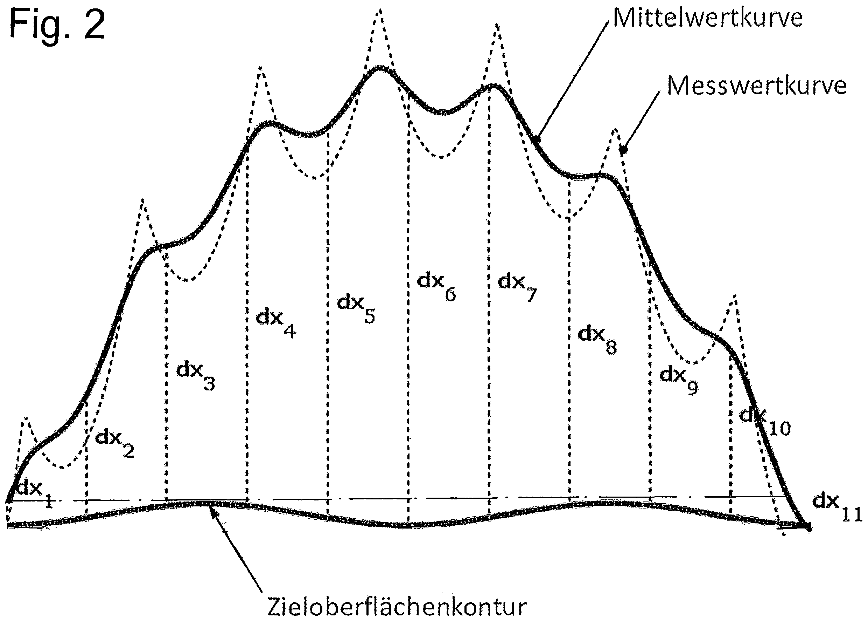

Nachdem die Geradheiten erfasst sind, erfolgt eine Mittelwertbildung der Geradheiten aller Messlagen zueinander, so dass eine Mittelwertkurve vorliegt, siehe hierzu **Fig. 1** und **Fig. 2****,** in denen jeweils die Radiusabweichung über der Lagerbreite dargestellt ist.

Nachfolgend wird aus der Mittelwertkurve und dabei ausgehend vom ersten Messpunkt eine Bezugsebene festgelegt, die als Nullpunkt definiert wird. Danach werden in definierten axialen Abständen Differenzwerte der Mittelwertkurve der Geradheit zu einer vorgegebenen Kompensationskurve ermittelt. Dieser Zusammenhang ist ebenfalls aus **Fig. 1** und **Fig. 2** ersichtlich, wobei die konkret angestrebte Sollkontur als Zieloberflächenkontur bezeichnet ist.

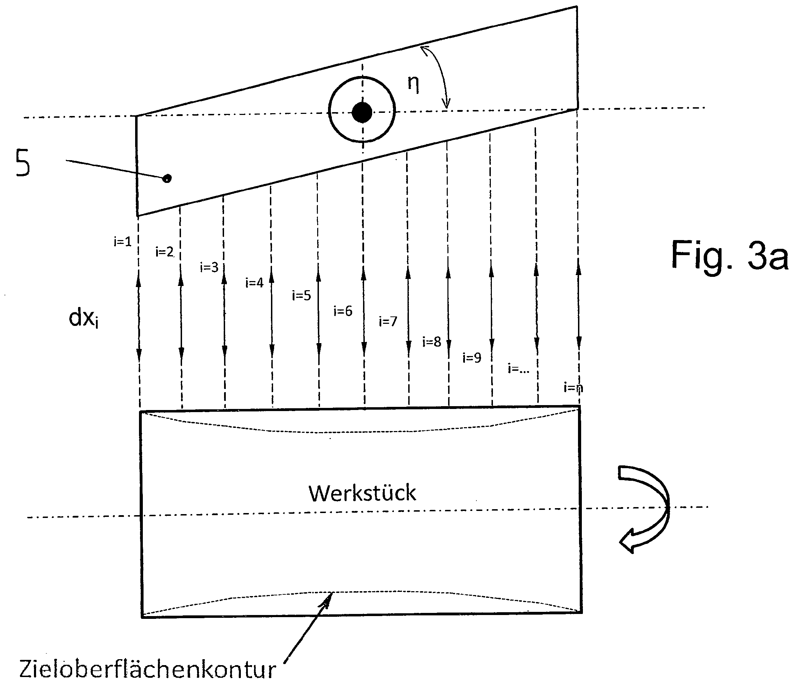

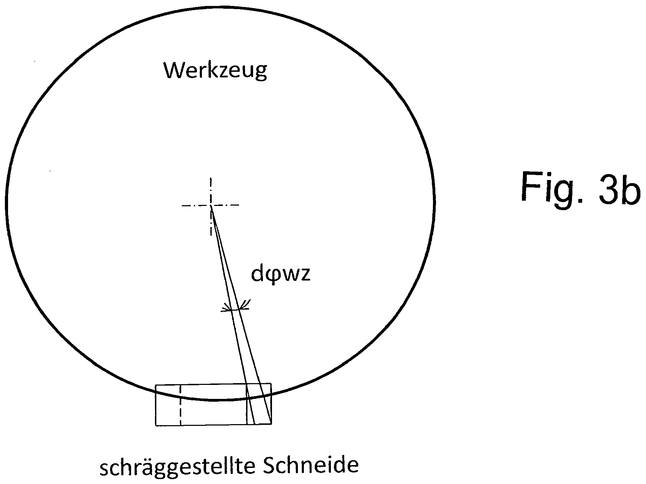

Die Differenzwerte dx₁ ... dxₙ werden als Korrekturwerte in einer tabellarischen Form in der Steuerung hinterlegt und als Kompensationswerte verwendet, indem jeder einzelne Kompensationswert einer Winkellage des Werkzeuges zugeordnet wird. Dieser Wert wird zur Auslösung einer Kompensationsbewegung winkelgetreu auf die zugeordnete Schneide 5 oder 6 aufgeprägt. Der Wirkzusammenhang ist beispielhaft aus **Fig. 3a****,** **Fig. 3b** **und** **Fig. 5** ersichtlich. Dabei soll für das Werkstück (Kurbelwelle) als Zieloberflächenkontur eine konkave Kontur erzeugt werden, die als unterbrochene Strichlinie stilisiert ist. Der in Fig. 3a dargestellte Pfeil stilisiert die Drehachse des Werkstückes, also der Kurbelwelle. Die radiale Werkzeugkompensationsbewegung wird durch die Schrägstellung der Schneiden 5 bzw. 6 bewirkt, wobei das Werkzeugdrehwinkelinkrement "dcpwz" über den Schrägungswinkel "η" der Schneide mit axialem Vorschub auf der Schneide/Werkstückoberfläche zusammenhängt.

Nach der Kompensationsbearbeitung können die Kurbelwellen bei Bedarf noch weiter bearbeitet werden. So können beispielsweise die Lagersitze festgewalzt und/oder glattgewalzt werden bzw. drehgeräumte Lagersitze gefinisht werden.

### Bezugszeichenliste

- 1: Werkzeugträger
- 2: HSK-Aufnahme
- 3: Radienschneideinsatz
- 4: Radienschneideinsatz
- 5: Schlichteinsatz / Schneide / links
- 6: Schlichteinsatz / Schneide / rechts

- dx₁ ... dxₙ: Differenzwert / Kompensationswert
- dϕwz: Werkzeugdrehwinkel
- η: Schrägungswinkel
- B: Schwenkachse des Werkzeuges

## Patentansprüche

1. Verfahren zum Feinbearbeiten von vorbearbeiteten Lagersitzen der Hauptlager und Hublager von Kurbelwellen durch Drehräumen, wobei Schneidwerkzeuge über jeweils unterschiedliche Bereiche der Lagerfläche geführt werden, **dadurch gekennzeichnet,**
**dass** jeweils mindestens ein Lagersitz mit mindestens zwei gegenläufig angeordneten Schneiden durch Feindrehräumen nacheinander bearbeitet wird,
wobei vor dem Feinschneiden auf Fertigmaß jeweils eine Messung der Oberflächengeometrie (Geradheit, Rundheit) erfolgt,
indem Geradheiten in mehreren definierten Winkellagen entlang der Lagerachse auf der Oberfläche der Lagersitze erfasst werden,
indem Rundheiten an mehreren definierten Achspositionen gemessen werden und
wobei, sofern eine Abweichung der IST-Oberflächengeometrie von einer vorab definierten SOLL-Oberflächengeometrie ermittelt wird, eine Korrektur berechnet wird,
wobei diese berechnete Korrektur jeder sich im Eingriff befindlichen Schneide während des Schnittprozesses überlagert wird,
indem während des Schneideneingriffes eine zur Oberfläche der Lagersitze normale und/oder tangentiale Kompensationsbewegung der Schneide in direkter Abhängigkeit der Drehbewegung der Schneide und/oder in direkter Abhängigkeit der Drehbewegung der Werkstückspindel derart ausgeführt wird,
**dass** zumindest Teilbereiche der Oberfläche des Lagersitzes bearbeitet werden können.

2. Verfahren nach Anspruch 1, **dadurch gekennzeichnet,**
**dass** zur Erfassung der Geradheit der Lageroberflächen die zu bearbeitende Kurbelwelle positioniert und ein Sensor über die Lageroberflächen bewegt wird,
wobei zunächst die Anzahl der zu ermittelnden Messlagen definiert wird und
danach der Sensor relativ zur Messoberfläche über die Achsen der Werkzeugmaschine in seinen Messbereich positioniert und zum Beginn der Messstrecke bewegt wird,
danach die Kurbelwelle auf die erste Messlage bewegt wird,
danach der Sensor in Längsrichtung des Lagersitzes (Z-Richtung) bis zum Ende der Messstrecke bewegt wird, wobei während dieser Bewegung eine wählbare Anzahl von Messwerten über eine zugeordnete Erfassungseinheit erfasst wird,
danach der Sensor an den Beginn der Messstrecke repositioniert wird und
weitere gleichartige Messabläufe solange durchgeführt werden, bis alle Messlagen und damit Geradheiten erfasst und aufgezeichnet wurden,
**dass** anschließend eine Mittelwertbildung der Geradheiten aller Messlagen zueinander erfolgt,
wobei aus einer daraus resultierenden Mittelwertkurve ausgehend vom ersten Messpunkt eine Bezugsebene festgelegt und diese als Nullpunkt definiert wird, ,
**dass** danach in definierten axialen Abständen Differenzwerte der Mittelwertkurve der Geradheit zu einer vorgegebenen Kompensationskurve ermittelt und als Korrekturwerte in tabellarischer Form lagerspezifisch in der Steuerung hinterlegt werden,
wobei diese Korrekturwerte als Kompensationswerte verwendet werden, indem jeder Kompensationswert einer Winkellage des Werkzeuges zugeordnet wird und
diesen Wert zur Auslösung einer Kompensationsbewegung winkelgetreu auf die jeweils zugeordnete Schneide aufprägt.

3. Verfahren nach Anspruch 1, **dadurch gekennzeichnet,**
**dass** zur Erfassung der Rundheit der Lageroberflächen die zu bearbeitende Kurbelwelle positioniert und ein Sensor über die Lageroberflächen bewegt wird,
wobei zunächst die Anzahl der zu ermittelnden axialen Messpositionen definiert wird und danach der Sensor relativ zur Messoberfläche über die Achsen der Werkzeugmaschine zur ersten axialen Messposition bewegt wird,
danach die Kurbelwelle auf die erste Messlage bewegt wird,
danach die Kurbelwelle in Umfangsrichtung des Lagersitzes (C-Richtung) bis zum Ende der Messstrecke bewegt wird, wobei während dieser Bewegung eine wählbare Anzahl von Messwerten über eine zugeordnete Erfassungseinheit erfasst wird,
danach die Kurbelwelle an den Beginn der Messstrecke repositioniert und der Sensor zur nächsten axialen Messposition bewegt wird und
weitere gleichartige Messabläufe solange durchgeführt werden, bis alle Messlagen und damit Rundheiten erfasst und aufgezeichnet wurden,
**dass** danach aus den einzelnen Rundheitskurven winkellageabhängige Geradheitskurven abgeleitet werden,
**dass** anschließend eine Mittelwertbildung der Geradheiten aller Messlagen zueinander erfolgt,
wobei aus einer daraus resultierenden Mittelwertkurve ausgehend vom ersten Messpunkt eine Bezugsebene festgelegt und diese als Nullpunkt definiert wird,
**dass** danach in definierten axialen Abständen Differenzwerte der Mittelwertkurve der Geradheit zu einer vorgegebenen Kompensationskurve ermittelt und als Korrekturwerte in tabellarischer Form lagerspezifisch in der Steuerung hinterlegt werden,
wobei diese Korrekturwerte als Kompensationswerte verwendet werden, indem jeder Kompensationswert einer Winkellage des Werkzeuges zugeordnet wird und
diesen Wert zur Auslösung einer Kompensationsbewegung winkelgetreu auf die jeweils zugeordnete Schneide aufprägt.

4. Verfahren nach Anspruch 1, **dadurch gekennzeichnet,**
**dass** die Lagersitze der Kurbelwelle festgewalzt und/oder glattgewalzt werden.

5. Verfahren nach Anspruch 1, **dadurch gekennzeichnet,**
**dass** die drehgeräumten Lagersitze der Kurbelwelle gefinisht werden.

6. Verfahren nach Anspruch 1, **dadurch gekennzeichnet,**
**dass** mit der Kompensationsbewegung eine Schrägstellung der Schneide durch Verfahren der B-Achse (Schwenkachse des Werkzeuges) des Antriebsaggregates erfolgt.

7. Vorrichtung zur Durchführung eines Verfahrens nach Anspruch 6 zur Erzeugung von kegeligen oder balligen Flächen an Hauptlagern, und Hublagern einer Kurbelwelle mittels Drehräumen, **dadurch gekennzeichnet,**
**dass** die Vorrichtung als ein segmentförmiges Werkzeug ausgestaltet ist mit einem Werkzeugträger (1), der Schneideinsätze (3; 4) für Freistiche oder Radienübergänge und Schlichteinsätze mit zueinander gegenläufig angeordneten Schneiden (5; 6) für eine Drehräumbearbeitung aufweist sowie einen Spannkegel und eine HSK-Aufnahme (2), wobei der Werkzeugträger (1) mittels der HSK-Aufnahme (2) über ein Werkzeugmagazin und Greifer in die Werkzeugaufnahme des Antriebskopfes eines Dreh-Fräs-Bohr-Bearbeitungszentrums einwechselbar und um die B-Achse schwenkbar ist.

## Claims

1. A method for the fine machining of premachined bearing seats of the main bearings and pin bearings of crankshafts by rotary broaching, wherein cutting tools are guided over different areas of the bearing surface in each case, **characterized in that**
in each case at least one bearing seat is machined successively by fine rotary broaching with at least two cutting edges arranged in opposite directions,
the surface geometry (straightness, roundness) is measured before precision cutting to the finished size,
**in that** straightnesses are detected in several defined angular positions along the bearing axis on the surface of the bearing seats,
**in that** roundness is measured at several defined axis positions, and
wherein a correction is calculated if a deviation of the ACTUAL surface geometry from a predefined TARGET surface geometry is determined,
wherein this calculated correction is superimposed on each cutting edge being engaged during the cutting process,
**in that** a compensating movement of the cutting edge normal to the surface of the bearing seats and/or tangential to the surface of the bearing seats is carried out during the cutting engagement in direct dependence on the rotary movement of the cutting edge and/or in direct dependence on the rotary movement of the workpiece spindle in such a manner that at least partial areas of the surface of the bearing seat can be machined.

2. The method according to claim 1, **characterized in that**
the crankshaft to be machined is positioned and a sensor is moved over the bearing surfaces to detect the straightness of the bearing surfaces,
wherein first the number of measuring positions to be determined is defined and
then the sensor is positioned relative to the measuring surface into its measuring range by means of the axes of the machine tool and moved to the beginning of the measuring section, then the crankshaft is moved to the first measuring position,
then the sensor is moved in the longitudinal direction of the bearing seat (Z-direction) to the end of the measuring section, wherein during which movement a selectable number of measured values is acquired by means of an associated acquisition unit,
then the sensor is repositioned to the beginning of the measuring section, and
other similar measuring sequences are carried out until all measuring positions and thus straightnesses have been detected and recorded,
**in that**, subsequently, an averaging takes place of the straightnesses of all measuring positions to each other,
wherein a reference plane is determined from a resulting mean value curve starting from the first measuring point and this plane is defined as the zero point,
**in that** differential values of the mean value curve are then determined at defined axial intervals in relation to a specified compensation curve and stored in the control system as correction values in tabular form specific to the bearing,
wherein these compensation values are used as compensation values by assigning each compensation value to an angular position of the tool and
imprints this value on the respective associated cutting edge at the correct angle to trigger a compensation movement.

3. The method according to claim 1, **characterized in that**
the crankshaft to be machined is positioned and a sensor is moved over the bearing surfaces to detect the roundness of the bearing surfaces,
wherein first the number of axial measuring positions to be determined is defined and
then the sensor is moved relative to the measuring surface by means of the axes of the machine tool to the first axial measuring position,
then the crankshaft is moved to the first measuring position,
the crankshaft is then moved in the circumferential direction of the bearing seat (C direction) to the end of the measuring section, wherein a selectable number of measured values is recorded during this movement by means of an associated recording unit,
the crankshaft is then repositioned to the start of the measuring section and the sensor is moved to the next axial measuring position, and
other similar measuring sequences are carried out until all measuring positions and thus roundnesses have been detected and recorded,
**in that** angle-dependent straightness curves are then derived from the individual roundness curves,
**in that**, subsequently, an averaging takes place of the straightnesses of all measuring positions to each other,
wherein a reference plane is determined from a resulting mean value curve starting from the first measuring point and this plane is defined as the zero point,
**in that** differential values of the mean value curve are then determined at defined axial intervals in relation to a specified compensation curve and stored in the control system as correction values in tabular form specific to the bearing,
wherein these compensation values are used as compensation values by assigning each compensation value to an angular position of the tool and
imprints this value on the respective associated cutting edge at the correct angle to trigger a compensation movement.

4. The method according to claim 1, **characterized in that**
the bearing seats of the crankshaft are tight-rolled and/or smooth-rolled.

5. The method according to claim 1, **characterized in that**
the rotary broached bearing seats of the crankshaft are finished.

6. The method according to claim 1, **characterized in that**
the compensation movement causes an inclined position of the cutting edge by moving the B-axis (swivel axis of the tool) of the drive unit.

7. An apparatus for carrying out a method according to claim 6 for producing tapered or crowned surfaces on main bearings and pin bearings of a crankshaft by means of rotary broaches, **characterized in that**
the device is designed as a segment-shaped tool with a tool carrier (1) which has cutting inserts (3; 4) for undercuts or radius transitions and finishing inserts with cutting edges (5; 6) for rotary broaching machining, as well as a clamping cone and a hollow shaft taper/HSK (2), wherein the tool carrier (1) can be exchanged by means of the hollow shaft taper/HSK (2) using a tool magazine and gripper into the tool holder of the drive head of a turning-milling-drilling machining center, and can be pivoted about the B axis.

## Revendications

1. Procédé d'usinage de finition de chaises de paliers pré-usinées des paliers principaux et des paliers mobiles des vilebrequins par tournage-brochage dans lequel les outils de coupe sont guidés sur différentes zones de la surface de palier, **caractérisé en ce que** :
au moins une chaise de palier est usinée successivement par tournage-brochage de finition avec au moins deux arêtes de coupe disposées en sens inverse,
une mesure de la géométrie de surface (rectitude, circularité) est effectuée avant la coupe de précision à la cote finale,
en détectant la rectitude dans plusieurs positions angulaires définies le long de l'axe du palier sur la surface des chaises de palier,
en mesurant les circularités en plusieurs positions d'axes définies, et
si un écart entre la géométrie de surface REELLE et une géométrie de surface CONSIGNE prédéfinie est déterminé, une correction est calculée,
cette correction calculée étant superposée sur chaque arête de coupe intermédiaire pendant le processus de coupe,
en effectuant pendant l'attaque de l'outil un mouvement de compensation normal et/ou tangentiel à la surface des chaises de palier de l'arête de coupe en liaison directe avec le mouvement de rotation de l'arête de coupe et/ou en liaison directe avec le mouvement de rotation de la broche porte-pièce de telle sorte,
qu'au moins des parties de la surface de la chaise de palier puissent être usinées.

2. Procédé selon la revendication 1, **caractérisé en ce que**
le vilebrequin à usiner est positionné et qu'un capteur est déplacé sur les surfaces de palier pour détecter la rectitude des surfaces de palier,
le nombre de positions de mesure à déterminer est préalablement défini et
le capteur est ensuite positionné par rapport à la surface de mesure via les axes de la machine-outil dans sa plage de mesure et déplacé au début de la section de mesure,
le vilebrequin étant ensuite déplacé dans la première position de mesure,
le capteur étant ensuite déplacé dans la direction longitudinale du siège du palier (direction Z) jusqu'à la fin de la section de mesure, où un nombre sélectionnable de valeurs mesurées est acquis via une unité de détection assignée pendant ce mouvement,
le capteur étant ensuite repositionné au début de la section de mesure et
d'autres séquences de mesure similaires étant effectuées jusqu'à ce que toutes les positions de mesure et donc la rectitude aient été acquises et enregistrées,
la moyenne des rectitudes de toutes les positions mesurées les unes par rapport aux autres étant ensuite calculée,
un plan de référence étant établi à partir d'une courbe moyenne obtenue en commençant par le premier point de mesure et défini comme point zéro,
qu'à des intervalles axiaux définis, les valeurs différentielles de la courbe de valeurs moyennes de rectitude sont alors déterminées par rapport à une courbe de compensation prédéterminée et enregistrées dans le système de commande sous forme de tableau en tant que valeurs de correction pour des paliers spécifiques,
ces valeurs de correction sont utilisées comme valeurs de compensation en affectant chaque valeur de compensation à une position angulaire de l'outil et
en appliquant cette valeur à l'arête de coupe associée afin de déclencher un mouvement de compensation.

3. Procédé selon la revendication 1, **caractérisé en ce que**
pour détecter la circularité des surfaces de palier, le vilebrequin à usiner est positionné et un capteur est déplacé sur les surfaces de palier,
le nombre de positions de mesure axiales à déterminer étant d'abord défini, et
le capteur étant est déplacé par rapport à la surface de mesure via les axes de la machine-outil jusqu'à la première position de mesure axiale,
Le vilebrequin étant ensuite déplacé dans la première position de mesure,
le vilebrequin étant ensuite déplacé dans la direction circonférentielle de la chaise de palier (direction C) jusqu'à la fin de la section de mesure, un nombre sélectionnable de valeurs mesurées étant acquis via une unité de détection assignée pendant ce mouvement,
le vilebrequin étant ensuite repositionné au début de la section de mesure et le capteur étant déplacé vers la position de mesure axiale suivante et
d'autres séquences de mesure similaires étant effectuées jusqu'à ce que toutes les positions de mesure et donc les circularités aient été acquises et enregistrées,
des courbes de rectitude dépendant de la position angulaire étant ensuite dérivées des courbes de circularité individuelles,
la moyenne des rectitudes de toutes les positions mesurées les unes par rapport aux autres étant ensuite calculée,
un plan de référence étant établi à partir d'une courbe moyenne obtenue en commençant par le premier point de mesure et défini comme point zéro,
Qu'à des intervalles axiaux définis, les valeurs différentielles de la courbe de valeurs moyennes de rectitude sont alors déterminées par rapport à une courbe de compensation prédéterminée et enregistrées dans le système de commande sous forme de tableau en tant que valeurs de correction spécifiques aux paliers,
ces valeurs de correction sont utilisées comme valeurs de compensation en affectant chaque valeur de compensation à une position angulaire de l'outil et
en appliquant cette valeur à l'arête de coupe associée afin de déclencher un mouvement de compensation.

4. Procédé selon la revendication 1, **caractérisé en ce que**
les chaises de palier du vilebrequin sont galetées et/ou écrouies.

5. Procédé selon la revendication 1, **caractérisé en ce que**
les chaises de palier de vilebrequin qui ont été usinées sont finies.

6. Procédé selon la revendication 1, **caractérisé en ce que**
le mouvement de compensation entraîne l'inclinaison de l'arête de coupe en déplaçant l'axe B (axe de pivotement de l'outil) de l'unité motrice.

7. Dispositif d'exécution d'un procédé selon la revendication 6 pour la production de surfaces coniques ou sphériques sur les paliers principaux et les paliers mobiles d'un vilebrequin par tournage-brochage, **caractérisé en ce que**,
ce dispositif étant conçu comme un outil segmenté avec un porte-outil (1), des plaquettes de coupe (3; 4) pour les gorges ou les transitions de rayons et des plaquettes de finition avec des arêtes de coupe disposées dans des directions opposées (5; 6) pour un usinage par tournage-brochage, ainsi qu'un cône de serrage et un cône face creux/HSK (2), dans lequel le porte-outil (1) peut être remplacé via le cône face creux/HSK (2) au moyen d'un magasin d'outils et d'un préhenseur dans le support d'outil de la tête d'entraînement d'un centre d'usinage de tournage-fraisage-alésage et peut pivoter autour de l'axe B.
